# EUROPEAN PATENT SPECIFICATION

(11) **EP 0 429 008 B1**
(45) Date of publication and mention of the grant of the patent: **06.04.1994**
(21) Application number: 90121892.5
(22) Date of filing: 15.11.1990
(51) Int. Cl.: E01H 11/00

(54) **Orientable Tool Support**
Ausrichtbarer Werkzeugträger
Porte-outil ajustable

(30) Priority: 20.11.1989 IT 5349189
(43) Date of publication of application: 29.05.1991
(73) Proprietor: SO.RE.MA. FERROVIARIA S.r.l., 15067 Novi Ligure, Alessandria (IT)
(72) Inventor: Rossanigo, Cesare, I-15042 Bassignana (Alessandria) (IT)
(74) Representative: Modiano, Guido, Dr.-Ing.

(56) References cited:
- DE-A- 3 731 496

## Description

The present invention relates to an orientatable tool support, particularly for railroad maintenance, and more precisely to an orientatable support for shears, cutters and the like for the maintenance of railroads by means of rigged trucks, motorized railcars or self-propelled loaders.

As known, both the periodic maintenance and the clearing of railroad beds or embankments has to be carried out by cutting and removing hedges, shrubs and the like which flank the railroad beds. This maintenance is carried out by means of trucks or motorized railcars or self-propelled loaders provided with a swinging loading arm, and shears or cutters connected to the end of the arm which are actuated by fluid-operated jack systems.

In order to allow the correct orientation of the shears at any height and at any angle, said shears are connected to the end of said loading arm with the interposition of an orientatable support comprising a supporting arm engaging with a tang in the corresponding seat of a fixing element provided at the end of said loading arm.

In the known orientatable supports, the supporting arm has an end provided with a turret, having a fork-like element articulated thereto by means of a joint having orthogonal pivots or another equivalent elements; said fork supports the shears or cutter element, which is rigidly coupled thereto. A first fluid-operated jack and a second fluid-operated jack are provided in order to rotate the fork with respect to the turret about the related pivot and respectively to incline the fork with respect to said turret by rotating about the other pivot. The shears therefore have two degrees of freedom with respect to the arm of the loader. This arrangement can be insufficient in some operating steps due to the fact that a safety probe is rigidly associated with said shears and is intended to sense contact with the ground to prevent the actuation of said shears for example by means of the automatic movement of the loading arm in order to lift said shears. The known arrangement is also disadvantageous due to the fact that for some orientations, which are otherwise compatible with the correct operation of said shears, the safety probe intervenes and limits their use.

The aim of the present invention is to avoid this disadvantage by means of an orientatable support which, by virtue of an improved efficiency, allows the correct operation of the shears even in the positions in which, with current supports, the unwanted intervention of the safety probe prevents their use.

Another important object of the present invention is to provide an orientatable support which, by virtue of an improved structural efficiency, allows to orientate the shears so that the cutting plane which contains their jaws is, if necessary, perpendicular or substantially perpendicular to the axis of the logs or branches and the like to be cut, in order to improve the cutting action.

This aim, these objects and others which will become apparent hereinafter are achieved by an orientatable tool support as defined in the appended claims.

The present invention provides an orientatable support for shears and the like for the maintenance of railroad beds comprising a supporting arm with a tang for coupling with the seat of a loading arm, a turret at the end of said supporting arm, a fork-like element bearing the tool, said fork-like element being connected to said turret by means of an articulation joint with two pivots having orthogonal axes, and a pair of jacks for angularly moving said fork about the orthogonal axes of the articulation joint, characterized in that the supporting arm comprises two aligned portions between which a joint is interposed whereby to render said aligned portions rotatable with respect to one another about the common longitudinal axis, and in that it comprises a third fluid-operated jack adapted for rotating said aligned portions for longitudinal orientation of the supporting arm.

Further features and advantages of the invention will become apparent from the following detailed description and with reference to the accompanying drawings, wherein:
figure 1 is an elevation view of a self-propelled loader with a loading arm which comprises the orientatable support according to the present invention;
figure 2 is an enlarged-scale detail view of figure 1;

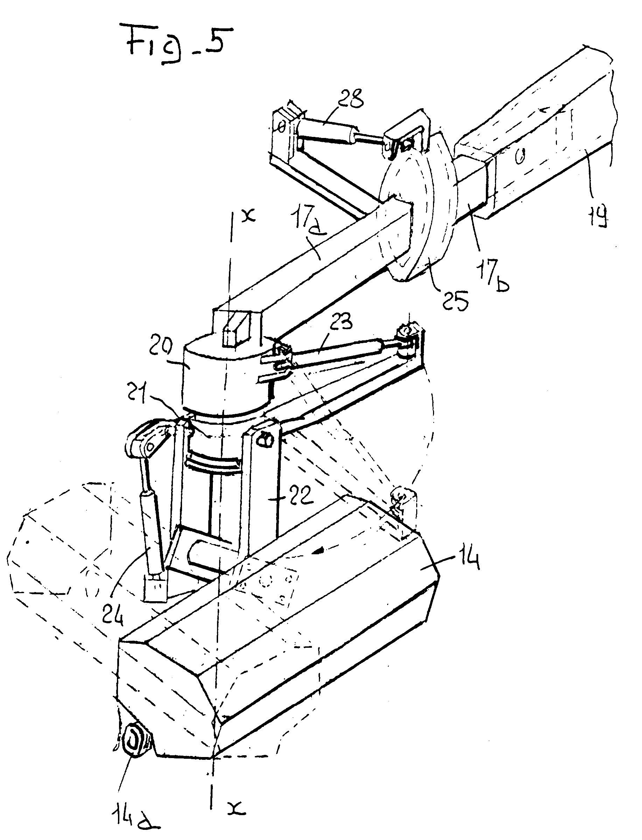

figure 3 is an enlarged-scale detail view of the supporting arm of the orientatable support;
figure 4 is a transverse sectional view, taken along the line IV-IV of figure 3;
figures 5, 6 and 7 are perspective detail views of the orientatable support according to the invention illustrating the related degrees of movement.

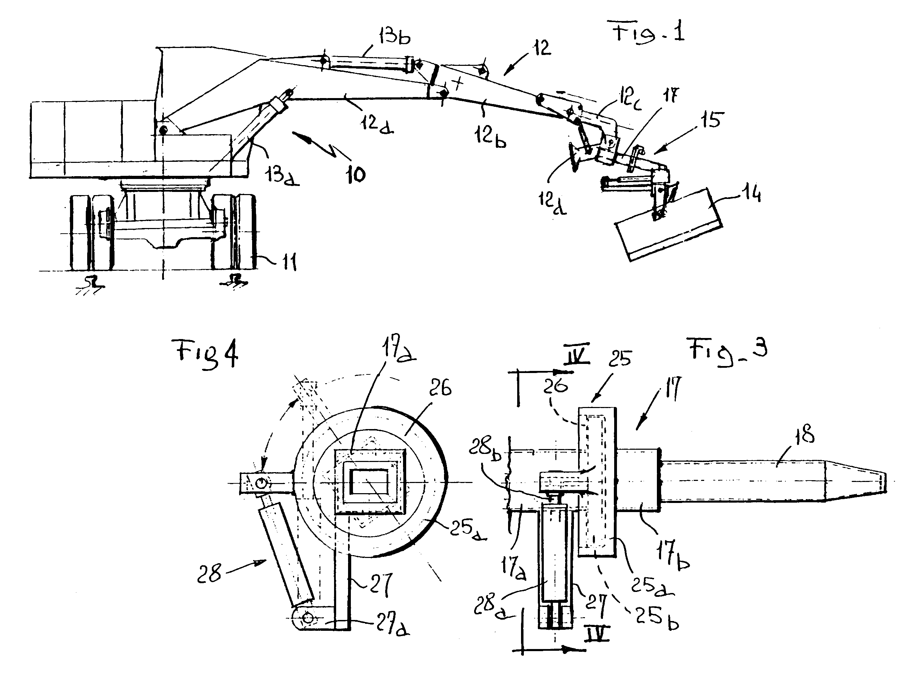

In figure 1, the reference numeral 10 generally indicates a self-propelled loader of the known type which comprises wheels 11 with tires and metal rims for combined use on roads and on railroads and a loading arm 12 with multiple pivoted sections 12a-12b which are controlled by respective jacks 13a-13b and with an extractable terminal section 12c.

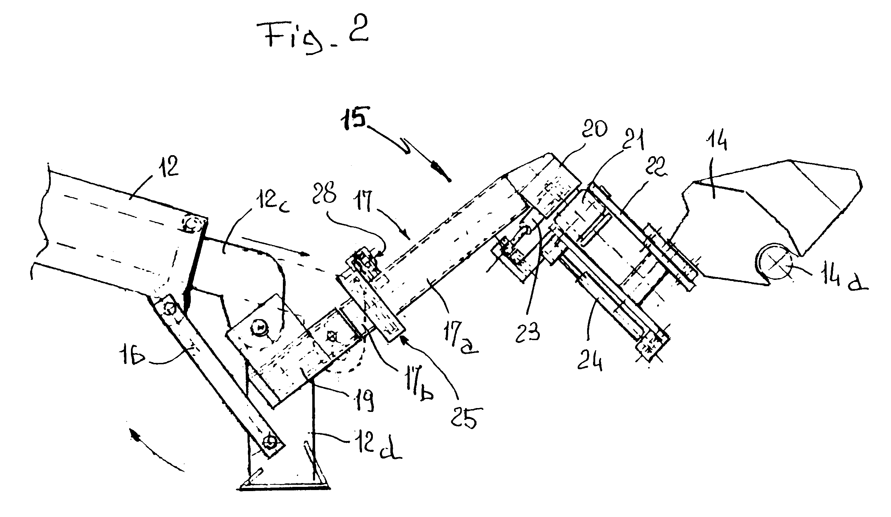

The reference numeral 14 indicates the protective housing of the shear-like tool, which is of a per se known type and therefore is not illustrated (for example shears of the "ROUSSEAU SP 120" type), and is supported by the end of the extractable section 12c of the loading arm with the interposition of the orientatable support 15 according to the present invention. A feeler roller 14a is rigidly associated with the housing 14 for sensing contact with the ground and for producing, in a per se known manner, the lifting of the arm 12. A resting foot 12d is also interposed between the end of the section 12c and the support 15 and is connected to the section 12b of the arm 12 by a connecting rod 16 so that it can assume, by virtue of the extraction and retraction of the section 12c, an idle position (figure 1) or an active position (figure 2).

In the active position, the foot 12d allows the derailment of the self-propelled loader without having to disassemble the orientatable support 15.

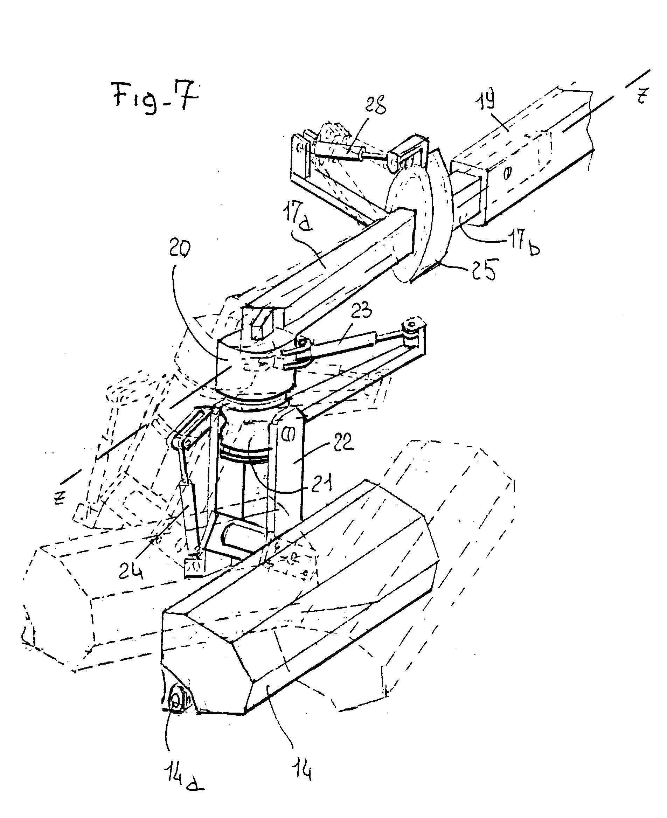

As clearly illustrated in figure 2, the orientatable support 15 comprises a supporting arm 17 which ends with a tang 18 engaging with the corresponding seat of a fixing element 19 supported by the section 12c of the loading arm 12. The arm 17 has, at its free end, a turret 20 to which a fork-like element 22 is connected by means of an articulation joint 21 with orthogonal pivots which define corresponding orthogonal rotation axes X and Y; the shears are rigidly associated with said fork-like element. A first fluid-operated jack 23 and a second fluid-operated jack 24 are provided in order to rotate the fork-like element 22 about the axes X and Y respectively for the Swinging and tilting of the shears, as clearly illustrated in figures 5 and 6.

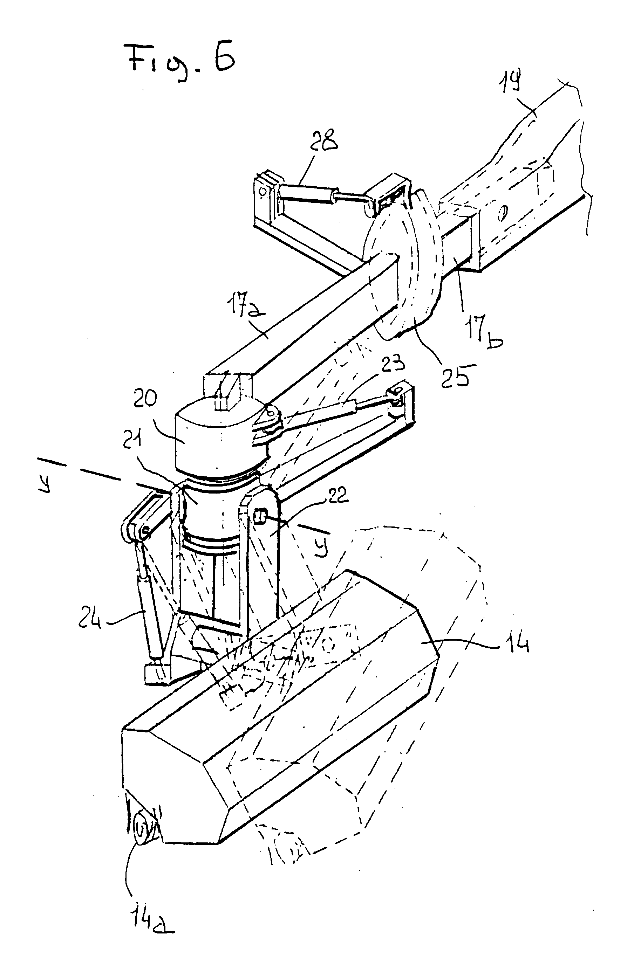

According to the present invention, besides these degrees of movement there is a third orientation rotation about the axis Z of the supporting arm 17. For this purpose, the arm 17 is formed by two arm portions 17a-17b arranged so that one is aligned on the extension of the other. The portions 17a, 17b are connected by a joint 25 which allows the rotation of the portion 17a with respect to the portion 17b about the common longitudinal axis. The joint 25 is advantageously formed by a bell-shaped disk 25a rigidly associated with the portion 17b bearing the tang 18 and in which a disk-shaped plate 25b, rigidly associated with the portion 17a, is contained and is freely rotatable. A flange 26 is arranged frontally with respect to the bell-shaped disk and is rigidly coupled thereto by means of bolts or the like in order to be axially coupled to the disk-shaped flange. A bracket 27 is also rigidly associated with the portion 17a, and the cylinder 28a of a third jack 28 is articulated thereto by means of an eyelet 27a. The stem of said third jack 28 is articulated to a corresponding eyelet of the bell-shaped disk 25a. The arrangement is such that the extension and retraction of the jack 28 correspond to respective rotations of the portion 17a with respect to the portion 17b (figure 4) and consequently of the shears (figure 7) about a third axis Z which coincides with the longitudinal axis of the arm 17, so that the shears have three degrees of movement with respect to the loading arm 12.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. Orientatable tool support, particularly for railroad maintenance comprising a supporting arm (15) provided with a tang (18) for coupling with the seat of a loading arm (12), a turret (20) at the end of said supporting arm (15), a fork-like element (22) bearing the tool, said fork-like element (22) being connected to said turret (20) by means of an articulation joint (21) with two pivots having orthogonal axes (X,Y), and a pair of fluid-operated jacks (23, 24) for angularly moving said fork-like element (22) about the orthogonal axes of the articulation joint (21), characterized in that the supporting arm (15) comprises two aligned portions between which a joint (25) is interposed whereby to render said portions rotatable with respect to one another about the common longitudinal axis (Z), and in that it comprises a third fluid-operated jack (28) adapted for rotating said aligned portions of the supporting arm (15) in order to orientate the fork-like element (22) about a third axis which coincides with said longitudinal axis of the supporting arm (15).

2. Orientatable support according to claim 1, characterized in that the joint (25) interposed between the mutually rotatable portions of the supporting arm (15) comprises a bell-shaped disk (25a) rigidly associated with a portion in which a disk-shaped plate (25b) is accommodated and is freely rotatable, said disk-like plate (25b) being rigidly associated with the other portion of the arm (15), ring means (26) being provided for the axial retention of the disk-shaped plate (25b) with respect to the bell-shaped disk.

3. Orientatable support according to claims 1 and 2, characterized in that the portion of the supporting arm (15) with which the disk-shaped plate (25b) is rigidly associated bears a bracket (27) with an eyelet (27a) to which the cylinder of the third fluid-operated jack (28) is articulated, the stem of said third jack being articulated to a corresponding eyelet of the bell-shaped disk (25a) which is rigidly associated with the other arm portion.

4. Orientatable support according to claim 1, characterized in that it comprises a resting foot (12d) which is interposed between its own supporting arm (15) and the self-propelled loading arm (12), said resting foot (12d) being connected to the loading arm (12) by means of a connecting rod (16) and being suitable for assuming an idle position and an active position in which it allows the derailment of the loader without requiring the disassembly of the orientatable support.

## Patentansprüche

1. Ausrichtbarer Werkzeugträger, insbesondere für die Instandhaltung von Bahnstrecken, mit einem Tragarm (15), der mit einem Schaft (18) für die Verbindung mit einer Aufnahme eines Ladearmes (12) versehen ist, einem Drehkopf (20) am Ende des genannten Tragarmes (15), einem gabelartigen Element (22), das das Werkzeug trägt, wobei das genannte gabelartige Element (22) mit dem genannten Drehkopf (20) mittels einer Gelenkverbindung (21) mit zwei Gelenken mit zueinander senkrechten Achsen (X, Y) verbunden ist, und mit einem Paar fluidbetätigter Arbeitszylinder (23, 24) zum winkelmäßigen Bewegen des genannten gabelartigen Elements (22) um die zueinander senkrechten Achsen der Gelenkverbindung (21), dadurch gekennzeichnet, daß der Tragarm (15) zwei miteinander fluchtende Teile aufweist, zwischen, denen eine Verbindung (25) eingebaut ist, um die genannten Teile relativ zueinander um die gemeinsame Längsachse (Z) drehbar zu machen, und daß ein dritter fluidbetätigter Arbeitszylinder (28) vorhanden ist, der zum Drehen der genannten fluchtenden Teile des Tragarms (15) vorgesehen ist, um das gabelartige Element (22) um eine dritte Achse zu drehen, die mit der genannten Längsachse des Tragarms (15) zusammenfällt.

2. Ausrichtbarer Träger nach Anspruch 1, dadurch gekennzeichnet, daß die zwischen die gegeneinander verdrehbaren Teile des Tragarms (15) eingebaute Verbindung (25) eine glockenförmige Scheibe (25a) aufweist, die starr mit dem einen Teil verbunden ist und in der eine scheibenförmige Platte (25b) aufgenommen und frei drehbar ist, wobei die genannte scheibenförmige Platte (25b) starr mit dem anderen Teil des Armes (15) verbunden ist und ein ringartiges Mittel (26) für die axiale Sicherung der scheibenförmigen Platte (25b) relativ zu der glockenförmigen Scheibe vorgesehen ist.

3. Ausrichtbarer Träger nach den Ansprüchen 1 und 2, dadurch gekennzeichnet, daß der Teil des Tragarmes (15), mit dem die scheibenförmige Platte (25b) starr Verbunden ist, einen Halter (27) mit einem Auge (27a) trägt, an dem der Zylinder des dritten fluidbetätigten Arbeitszylinders (28) angelenkt ist, wobei die Kolbenstange des genannten dritten Arbeitszylinders an einem zugehörigen Auge der glockenförmigen Scheibe (25a) angelenkt ist, welche starr mit dem anderen Armteil verbunden ist.

4. Ausrichtbarer Träger nach Anspruch 1, dadurch gekennzeichnet daß er einen Abstützfuß (12d) aufweist, der zwischen seinen eigenen Tragarm (15) und den selbstangetriebenen Ladearm (12) eingebaut ist, wobei der genannte Abstützfuß (12d) mit dem Ladearm (12) über eine Verbindungsstange (16) verbunden und dazu geeignet ist, eine Ruhestellung und eine Arbeitsstellung einzunehmen, in der er das Ausgleisen des Ladegeräts ermöglicht, ohne daß ein Abnehmen des ausrichtbaren Trägers erforderlich ist.

## Revendications

1. Support d'outil orientable, particulièrement pour l'entretien d'une voie ferrée, comprenant un bras de support (15) pourvu d'une queue (18) pour un accouplement avec le siège d'un bras de chargement (12), une tourelle (20) à l'extrémité dudit bras de support (15), un élément (22) analogue à une fourche et portant l'outil, ledit élément analogue à une fourche (22) étant relié à ladite tourelle (20) au moyen d'un joint d'articulation (21) à l'aide de deux tourillons dont les axes sont orthogonaux (X, Y), et une paire de vérins (23, 24) actionnés par un fluide pour déplacer angulairement ladite fourche autour des axes orthogonaux du joint d'articulation (21), caractérisé en ce que le bras de support (15) comprend deux parties alignées entre lesquelles un joint (25) est interposé pour rendre ainsi rotatives lesdites parties l'une par rapport à l'autre autour de l'axe longitudinal commun (Z), et en ce qu'il comprend un troisième vérin (28) actionné par un fluide et adapté pour faire tourner lesdites parties alignées du bras de support (15) afin d'orienter la fourche autour d'un troisième axe qui coïncide avec ledit axe longitudinal du bras de support (15).

2. Support orientable selon la revendication 1, caractérisé en ce que le joint (25) interposé entre les parties mutuellement rotatives du bras de support (15) comprend un disque (25a) en forme de cloche associé rigidement à une partie dans laquelle une plaque (25b) en forme de disque est logée et peut tourner librement, ladite plaque (25b) analogue à un disque étant associée rigidement à l'autre partie du bras (15), un moyen annulaire (26) étant prévu pour la retenue axiale de la plaque (25b) en forme de disque par rapport au disque en forme de cloche.

3. Support orientable selon les revendications 1 et 2, caractérisé en ce que la partie du bras de support (15) avec laquelle la plaque (25b) en forme de disque est associée rigidement porte une pièce de support (27) sur laquelle, à l'aide d'un piton d'articulation (27a), le cylindre du troisième vérin (28) actionné par un fluide est articulé, la tige dudit troisième vérin étant articulée à un piton d'articulation correspondant au disque (25a) en forme de cloche qui est associé rigidement à l'autre partie de bras.

4. Support orientable selon la revendication 1, caractérisé en ce qu'il comprend un pied d'appui (12d) qui est interposé entre son propre bras de support (15) et le bras de chargement autopropulsé (12), ledit pied d'appui (12d) étant relié au bras de chargement (12) au moyen d'une bielle (16) et étant approprié pour prendre une position de repos et une position active dans laquelle il permet le déraillement du dispositif de chargement sans nécessiter le démontage du support orientable.
